# EUROPEAN PATENT APPLICATION

(11) **EP 2 835 212 A2**
(43) Date of publication of application: **11.02.2015**
(21) Application number: 14179059.2
(22) Date of filing: 30.07.2014
(51) Int. Cl.: B23K 35/32, B23K 35/02

(54) **Composite electro-spark electrode and methods of its use**

(30) Priority: 09.08.2013 US 201313963067
(71) Applicant: General Electric Company, Schenectady, New York 12345 (US)
(72) Inventor: Hunt, Mark Lawrence, Greenville, SC 29615 (US)
(74) Representative: Illingworth-Law, William Illingworth

(57) **Abstract**

Composite electro-spark electrodes 10, along with methods of their use in an electro-spark deposition process, are provided. The composite electro-spark electrode 10 can include an electrode tip 12 that is mechanically and electrically attached to a shank 14. The shank 14 comprises a resistive material, and the electrode tip 12 comprises a metal, with the metal of the electrode tip 12 being less electrically resistive than the resistive material of the shank 14. Additionally, the metal of the electrode tip 12 can be more thermally conductive than the resistive material of the shank 14.

## Description

The invention relates generally to the field of electro-spark electrodes and their use in electro-spark deposition (ESD). In one embodiment, a composite electro-spark electrode is generally disclosed, along with methods of its use in ESD.

Electro-spark deposition (ESD) is a micro-welding process that uses rapid electrical power discharges to accomplish metal transfer from an electrode to a contacting substrate. ESD enables cladding/joining of metallurgically incompatible materials and can achieve deposits on a micro scale. Due to the rapid thermal cycles and low heat input, ESD allows for micron scale interaction zones with the substrate. During ESD, the generation of resistive heating in the electrode is critical to the process. Generally, heat is generated in an ESD electrode by passing electrical current down the length of the electrode. If the electrode is not sufficiently hot, transfer and deposit of material onto the substrate is not achievable.

Heat buildup in the electrode is a function of electrical resistivity and thermal conduction. In general, refractory metals/alloys such as tungsten and molybdenum have relatively electrical low resistivity and high thermal conduction thus making them unsuitable electrodes for ESD. Because of these characteristics, many refractory metals cannot be successfully deposited using ESD. For example, tungsten and molybdenum have thermal conductivities 5 to 10 times that of Ni base superalloys and about 1/30th the electrical resistivity.

However, it is often desirable to deposit materials via ESD that have relatively electrical low resistivity and high thermal conduction. As such, a need exists for a system and method of depositing such metals/alloys in an ESD process.

Aspects and advantages of the invention will be set forth in part in the following description, or may be obvious from the description, or may be learned through practice of the invention.

Composite electro-spark electrodes are generally provided, along with methods of their use in an electro-spark deposition process. In one embodiment, the composite electro-spark electrode includes an electrode tip mechanically and electrically attached to a shank. The shank comprises a resistive material, and the electrode tip comprises a metal, with the metal of the electrode tip being less electrically resistive than the resistive material of the shank. Additionally, the metal of the electrode tip can be more thermally conductive than the resistive material of the shank.

For example, the metal of the electrode tip can have an electrical resistance of about 5.3 x 10⁻⁸ ohm meters at 295 K to about 4.3 x 10⁻⁸ ohm meters at 295 K, and/or the resistive material of the shank can have an electrical resistance of about 139.0 x 10⁻⁸ ohm meters at 295 K to about 5.8 x 10⁻⁸ ohm meters at 295 K. In certain embodiments, the metal of the electrode tip can include molybdenum, tungsten, magnesium, rhodium, iridium, or alloys thereof, and/or the resistive material of the shank can be a resistive metal (e.g., titanium, nickel, cobalt, iron, manganese, zirconium, chromium, or an alloy thereof).

In one particular embodiment, the composite electro-spark electrode includes an electrode tip consisting of a metal that is mechanically and electrically attached to a shank consisting of a resistive metal, with the metal of the electrode tip being different than the resistive metal of the shank. That is, the metal of the electrode tip is less electrically resistive than the resistive material of the shank, and, in certain embodiments, the metal of the electrode tip is also more thermally conductive than the resistive material of the shank.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

A full and enabling disclosure of the present invention, including the best mode thereof, directed to one of ordinary skill in the art, is set forth in the specification, which makes reference to the appended figures, in which:
FIG. 1 is a side view of an exemplary composite electro-spark electrode according to one embodiment of this invention;
FIG. 2 is a side view of an exemplary composite electro-spark electrode according to another embodiment of this invention;
FIG. 3 is a schematic of an exemplary electro-spark deposition system suitable for use with the composite electro-spark electrode of Fig. 1 or Fig. 2.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

It is to be understood that the ranges and limits mentioned herein include all ranges located within the prescribed limits (i.e., subranges). For instance, a range from about 100 to about 200 also includes ranges from 110 to 150, 170 to 190, 153 to 162, and 145.3 to 149.6. Further, a limit of up to about 7 also includes a limit of up to about 5, up to 3, and up to about 4.5, as well as ranges within the limit, such as from about 1 to about 5, and from about 3.2 to about 6.5.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

A composite electro-spark electrode is generally provided. In one embodiment, the composite electro-spark electrode combines a low thermal conductive, highly resistive shank with a metal tip of the desired material to deposit. This combination allows for creation of the heat needed for the ESD process, via the resistive shank, while enabling deposition of the metal tip.

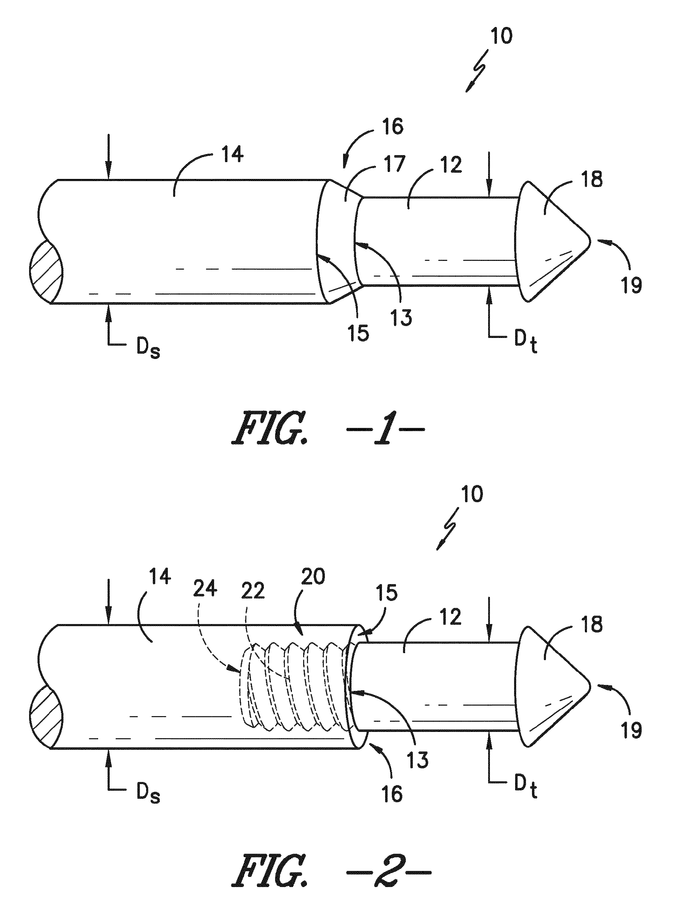

Referring to Fig. 1, an exemplary composite electro-spark electrode 10 is generally shown including an electrode tip 12 attached, both mechanically attached and electrically attached, to a shank 14 at a junction 16. The electrode tip 12 includes a tapered end 18 that defines a point 19 and is positioned at an opposite end of the electrode tip 12 from the shank 14. As stated, the electrode tip 12 is constructed from a metal having a relatively low electrical resistance (i.e., a relatively high electrical conductivity) and a relatively high thermal conductivity. This combination of a relatively low electrical resistance and a relatively high thermal conductivity would otherwise impair the metal from being deposited via ESD.

Conversely, the shank 14 is constructed from a resistive material that is more electrically resistive and, in certain embodiments, less thermally conductive than the metal of electrode tip 12. Put another way, the metal of the electrode tip 12 is less electrically resistive (i.e., more electrically conductive) and more thermally conductive than the resistive material of the shank 14. As such, the resistive material of the shank 14 can generate sufficient heat during an ESD process in order to deposit the metal of the electrode tip 12 onto a substrate.

As stated, the electrode tip 12 is generally formed from a metal having a relatively low electrical resistance. For example, the metal of the electrode tip 12 can have an electrical resistance of about 5.3 x 10⁻⁸ ohm meters at 295 K to about 4.3 x 10⁻⁸ ohm meters at 295 K. Additionally, in certain embodiments, the metal of the electrode tip 12 can have a thermal conductivity of about 1.3 W/cmK to about 1.8 W/cmK.

In certain embodiments, the metal of the electrode tip 12 comprises molybdenum, tungsten, magnesium, rhodium, iridium, or alloys thereof. For example, the metal of the electrode tip 12 can be molybdenum, tungsten, or an alloy thereof. In one particular embodiment, the metal of the electrode tip 12 is selected from the group consisting of molybdenum and tungsten.

Conversely, the shank 14 is constructed from an electrically resistive material that is more electrically resistive than the metal of electrode tip 12, and, in certain embodiments, less thermally conductive than the metal of electrode tip 12. For example, the resistive material can have an electrical resistance of about 139.0 x 10⁻⁸ ohm meters at 295 K to about 5.8 x 10⁻⁸ ohm meters at 295 K. Additionally, in certain embodiments, the resistive material of the shank 14 can have a thermal conductivity of about 0.07 W/cmK to about 1 W/cmK.

In one particular embodiment, the resistive material is a resistive metal, such as titanium, nickel, cobalt, iron, manganese, zirconium, chromium, or an alloy thereof (e.g., the resistive metal can be selected from the group consisting of titanium, nickel, cobalt, iron, manganese, zirconium, and chromium).

One particularly suitable composite electro-spark electrode 10 can be formed from an electrode tip 12 that comprises molybdenum attached a shank 14 that comprises titanium. This particular combination has been found particularly suitable for depositing a coating of molybdenum via ESD, which would otherwise not be achievable due to the conductive and thermal properties of molybdenum but for the presence of the titanium shank.

In one embodiment, the shank 14 has a shank diameter Dₛ that is greater than the diameter Dₜ of the electrode tip 12. Without wishing to be bound by any particular theory, it is believed that the smaller diameter Dₜ helps to further reduce the conductivity of the electrode tip 12, especially when attached to the shank 14 having a greater diameter Dₛ. That is, there is more resistive material per unit length (from the thicker shank 14) than conductive material per unit length (from the thinner electrode tip 12).

Referring to Figs. 1 and 2, the end 13 of the electrode tip 12 and the end 15 of the shank 14 are mechanically and electrically attached together at the junction 16 to form the composite electro-spark electrode 10. Any suitable attachment mechanism can form the junctions 16 between the electrode tip 12 and the shank 14, as long as a sufficient structural and electrical connection is made.

Fig. 1 shows a weld or braze 17 forming the junction 16 between the electrode tip 12 and the shank 14. For example, in embodiments where the junction 16 is a weld 17, the weld 17 can be a formed via percussion welding, flash welding, upset welding, etc. Alternatively, in embodiments where the junction 16 is a braze 17, the braze 17 can be a formed with any suitable filler metal present in the braze 17.

Fig. 2 shows an alternative embodiment where the junction 16 is formed via a threaded attachment 20 formed between a threaded post 22 extending from the end 13 of the tip 12 opposite of the tapered end 18 and a threaded cavity 24 defined within the shank 14.

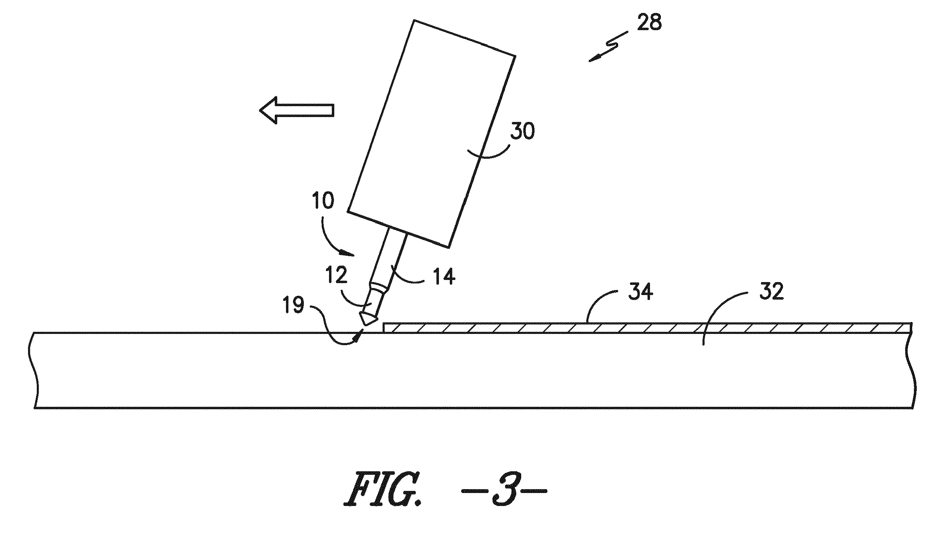

Fig. 3 depicts an electro-spark deposition system 28 is shown having an electro-spark deposition device 30 attached to the composite electro-spark electrode 10 of Fig. 1 or Fig. 2. Generally, the electro-spark deposition device 30 contains a capacitor-based power supply to produce short duration, high current pulses through the electro-spark electrode 10. The material of the electrode tip 12 (e.g., of the tapered end 18 and point 19) is deposited onto the work piece 32 to form a coating 34 thereon. In the electrospark deposition process, the electrode 10 is the anode and the work piece 32 is the cathode.

In certain embodiments, when the capacitor energy is released from the ESD device 30 to the electrode 10, the direct current generates a plasma arc at a high temperature (e.g., about 8,000° C to about 25,000 °C) between the tapered end 18 and/or point 19 of the electrode tip 12 and the work piece 32. The plasma arc ionizes the electrode tip 12 and a small quantity of molten refractive material is transferred from the electrode tip 12 onto the work piece 32 to form the coating 34. This transfer of material is rapid and the self-quenching is extremely fast.

Based on short duration, high current pulses, ESD process imparts a low heat input to the work piece 32, resulting in little or no modification of its microstructure. Moreover, the process generates a good metallurgical bond between the coating 34 and the work piece 32. As such, ESD is particularly suitable for repair of small and shallow defects in the work piece 32.

In one embodiment, the ESD system 28 is particularly suitable for applying a coating of a material (from the electrode tip 12) onto a work piece 32 that is a Ni-base superalloy, such as a GTD-111™ superalloy available from General Electric Company.

Methods are also generally provided forming a coating 34 on a work piece 32 utilizing an ESD device 30 in conjunction with a composite electro-spark electrode 10, such as discussed above. Referring to Fig. 3, the electrospark deposition system 28 is moved across the work piece 32 with the point 19 of the electrode tip 12 touching or in close proximity. The ESD device 30 creates direct current pulses to heat the electro-spark electrode 10 and deposit material from the electrode tip 12 onto the surface of the work piece 32 to form coating 34. As such, the composition of the coating 34 substantially matches the composition of the electrode tip 12. In one embodiment, the electro-spark electrode 10 is rotated to ensure substantially uniform depletion of material on the electrode tip 12.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A composite electro-spark electrode, comprising:
   a shank comprising a resistive material; and
   an electrode tip comprising a metal, wherein the electrode tip is mechanically and electrically attached to the shank, and wherein the metal of the electrode tip is less electrically resistive than the resistive material of the shank.
2. The composite electro-spark electrode of clause 1, wherein the metal of the electrode tip is more thermally conductive than the resistive material of the shank.
3. The composite electro-spark electrode of any preceding clause, wherein the metal of the electrode tip has a thermal conductivity of about 1.3 W/cmK to about 1.8 W/cmK, and wherein the resistive material has a thermal conductivity of about 0.07 W/cmK to about 1 W/cmK.
4. The composite electro-spark electrode of any preceding clause, wherein the metal of the electrode tip comprises molybdenum, tungsten, magnesium, rhodium, iridium, or alloys thereof.
5. The composite electro-spark electrode of any preceding clause, wherein the metal of the electrode tip is selected from the group consisting of molybdenum and tungsten.
6. The composite electro-spark electrode of any preceding clause, wherein the metal of the electrode tip has an electrical resistance of about 5.3 x 10⁻⁸ ohm meters at 295 K to about 4.3 x 10⁻⁸ ohm meters at 295 K, and wherein the resistive material has an electrical resistance of about 139.0 ohm meters at 295 K x 10⁻⁸ to about 5.8 x 10⁻⁸ ohm meters at 295 K.
7. The composite electro-spark electrode of any preceding clause, wherein the resistive material comprises a resistive metal.
8. The composite electro-spark electrode of any preceding clause, wherein the resistive metal comprises titanium, nickel, cobalt, iron, manganese, zirconium, chromium, or an alloy thereof.
9. The composite electro-spark electrode of any preceding clause, wherein the resistive metal is selected from the group consisting of titanium, nickel, cobalt, iron, manganese, zirconium, and chromium.
10. The composite electro-spark electrode of any preceding clause, wherein the metal of the electrode tip comprises molybdenum.
11. The composite electro-spark electrode of any preceding clause, wherein the resistive material of the shank comprises titanium.
12. The composite electro-spark electrode of any preceding clause, wherein the electrode tip is welded to an end of the shank.
13. The composite electro-spark electrode of any preceding clause, wherein the electrode tip is brazed to an end of the shank.
14. The composite electro-spark electrode of any preceding clause, wherein the electrode tip includes a tapered end that defines a point, wherein the tapered end is positioned at an opposite end of the electrode tip from the shank.
15. The composite electro-spark electrode of any preceding clause, wherein the electrode tip defines a diameter, and wherein the shank defines a shank diameter that is greater than the diameter of the electrode tip.
16. A composite electro-spark electrode, comprising:
   a shank consisting of a resistive metal; and
   an electrode tip consisting of a metal that is different than the resistive metal of the shank, wherein the electrode tip is mechanically and electrically attached to the shank, and wherein the metal of the electrode tip is less electrically resistive than the resistive material of the shank.
17. The composite electro-spark electrode of any preceding clause, wherein the metal of the electrode tip is selected from the group consisting of molybdenum and tungsten, and wherein the shank resistive metal consists of titanium.
18. The composite electro-spark electrode of any preceding clause, wherein the metal of the electrode tip is more thermally conductive than the resistive material of the shank.
19. The composite electro-spark electrode of any preceding clause, wherein the metal of the electrode tip has an electrical resistance of about 5.3 x 10⁻⁸ ohm meters at 295 K to about 4.3 x 10⁻⁸ ohm meters at 295 K, and wherein the resistive material of the shank has an electrical resistance of about 139.0 x 10⁻⁸ ohm meters at 295 K to about 5.8 x 10⁻⁸ ohm meters at 295 K.
20. The composite electro-spark electrode of any preceding clause, wherein the electrode tip defines a diameter, and wherein the shank defines a shank diameter that is greater than the diameter of the electrode tip.

## Claims

1. A composite electro-spark electrode (10), comprising:
a shank (14) comprising a resistive material; and
an electrode tip (12) comprising a metal, wherein the electrode tip (12) is mechanically and electrically attached to the shank (14), and wherein the metal of the electrode tip (12) is less electrically resistive than the resistive material of the shank (14).

2. The composite electro-spark electrode of claim 1, wherein the metal of the electrode tip (12) is more thermally conductive than the resistive material of the shank (14).

3. The composite electro-spark electrode of claim 2, wherein the metal of the electrode tip (12) has a thermal conductivity of about 1.3 W/cmK to about 1.8 W/cmK, and wherein the resistive material has a thermal conductivity of about 0.07 W/cmK to about 1 W/cmK.

4. The composite electro-spark electrode of claim 1, 2 or 3, wherein the metal of the electrode tip (12) comprises molybdenum, tungsten, magnesium, rhodium, iridium, or alloys thereof.

5. The composite electro-spark electrode of claim 1, 2 or 3, wherein the metal of the electrode tip (12) is selected from the group consisting of molybdenum and tungsten.

6. The composite electro-spark electrode of any preceding claim, wherein the metal of the electrode tip (12) has an electrical resistance of about 5.3 x 10⁻⁸ ohm meters at 295 K to about 4.3 x 10⁻⁸ ohm meters at 295 K, and wherein the resistive material has an electrical resistance of about 139.0 ohm meters at 295 K x 10⁻⁸ to about 5.8 x 10⁻⁸ ohm meters at 295 K.

7. The composite electro-spark electrode of any preceding claim, wherein the resistive material comprises a resistive metal.

8. The composite electro-spark electrode of claim 7, wherein the resistive metal comprises titanium, nickel, cobalt, iron, manganese, zirconium, chromium, or an alloy thereof

9. The composite electro-spark electrode of claim 7, wherein the resistive metal is selected from the group consisting of titanium, nickel, cobalt, iron, manganese, zirconium, and chromium.

10. The composite electro-spark electrode of any preceding claim, wherein the metal of the electrode tip (12) is selected from the group consisting of molybdenum and tungsten, and wherein the resistive metal of the shank (14) consists of titanium.

11. The composite electro-spark electrode of any preceding claim, wherein:
the metal of the electrode tip (12) comprises molybdenum, and/or
the resistive material of the shank (14) comprises titanium.

12. The composite electro-spark electrode of any preceding claim, wherein the electrode tip (12) is welded to an end of the shank (14), or the electrode tip (12) is brazed to an end of the shank (14).

13. The composite electro-spark electrode of any preceding claim, wherein the electrode tip (12) includes a tapered end (18) that defines a point, wherein the tapered end (18) is positioned at an opposite end of the electrode tip (12) from the shank (14).

14. The composite electro-spark electrode of any preceding claim, wherein the electrode tip (12) defines a diameter, and wherein the shank (14) defines a shank diameter that is greater than the diameter of the electrode tip (12).

15. The composite electro-spark electrode (10) of any preceding claim, comprising:
a shank (14) consisting of a resistive metal; and
an electrode tip (12) consisting of a metal that is different than the resistive metal of the shank (14), wherein the electrode tip (12) is mechanically and electrically attached to the shank (14), and wherein the metal of the electrode tip (12) is less electrically resistive than the resistive material of the shank (14).
